# EUROPÄISCHE PATENTSCHRIFT

(11) **EP 1 513 684 B1**
(45) Veröffentlichungstag und Bekanntmachung des Hinweises auf die Patenterteilung: **14.11.2007**
(21) Anmeldenummer: 03735537.7
(22) Anmeldetag: 04.06.2003
(51) Int. Cl.: B32B 27/34, B32B 27/40, B29C 39/02

(54) **VERFAHREN ZUR HERSTELLUNG VON VERBUNDELEMENTEN**
METHOD FOR PRODUCING COMPOSITE ELEMENTS
PROCEDE DE PRODUCTION D'ELEMENTS COMPOSITES

(30) Priorität: 06.06.2002 DE 10225338
(43) Veröffentlichungstag der Anmeldung: 16.03.2005
(73) Patentinhaber: BASF Aktiengesellschaft, 67056 Ludwigshafen (DE)
(72) Erfinder: STADLER, Edmund, 96142 Hollfeld (DE); REINERTH, Peter, 82275 Emmering (DE); DEININGER, Armin, 82275 Emmering (DE); REINDL, Armin, 80639 München (DE)
(86) Internationale Anmeldenummer: PCT/EP2003/005818
(87) Internationale Veröffentlichungsnummer: WO 2003/103958

(56) Entgegenhaltungen:
- EP-A- 0 421 222
- WO-A-02/20342
- WO-A-90/05633
- WO-A-98/21029
- WO-A-99/64234
- WO-A-03/002321
- WO-A-03/002341
- DE-A- 2 828 734
- DE-A- 19 825 084
- DE-A- 19 825 087
- DE-A- 19 835 727
- GB-A- 1 033 594
- GB-A- 2 066 156
- US-A- 3 696 452
- US-A- 3 864 201

## Beschreibung

Die Erfindung betrifft Verfahren zur Herstellung von Verbundelementen, die folgende Schichtstruktur aufweisen:
(i) 2 mm bis 20 mm, bevorzugt 2 mm bis 10 mm, besonders bevorzugt 5 mm bis 10 mm Metall, Kunststoff oder Holz, bevorzugt Metall,
(ii) 10 mm bis 300 mm, bevorzugt 10 mm bis 100 mm Kunststoff, bevorzugt Polyisocyanat-Polyadditionsprodukte,
(iii) 2 mm bis 20 mm, bevorzugt 2 mm bis 10 mm, besonders bevorzugt 5 mm bis 10 mm Metall, Kunststoff oder Holz, bevorzugt Metall,
durch Befüllen des Raumes zwischen bevorzugt horizontal ausgerichteten Schichten (i) und (iii) mit flüssigen Ausgangskomponenten zur Herstellung von (ii), bevorzugt mit einer Reaktionsmischung enthaltend (a) Isocyanate und (b) gegenüber Isocyanaten reaktive Verbindungen zur Herstellung von (ii) Polyisocyanat-Polyadditionsprodukten. Die eingangs dargestellten Längenangaben zu den Schichten (i), (ii) und (iii) beziehen sich auf die Dicken der jeweiligen Schicht. Außerdem bezieht sich die Erfindung auf Verbundelemente erhältlich durch das erfindungsgemäße Verfahren sowie Schiffe oder Bauwerke enthaltend die erfindungsgemäßen Verbundelemente.

Für die Konstruktion von Schiffen, beispielsweise Schiffsrümpfen und Laderaumabdeckungen, Brücken, Dächern oder Hochhäusern müssen Konstruktionsteile verwendet werden, die erheblichen Belastungen durch äußere Kräfte standhalten können. Derartige Konstruktionsteile bestehen aufgrund dieser Anforderungen üblicherweise aus Metallplatten oder Metallträgern, die durch eine entsprechende Geometrie oder geeignete Verstrebungen verstärkt sind. So bestehen Schiffsrümpfe von Tankschiffen aufgrund von erhöhten Sicherheitsnormen üblicherweise aus einem inneren und einem äußeren Rumpf, wobei jeder Rumpf aus 15 mm dicken Stahlplatten, die durch ca. 2 m lange Stahlverstrebungen miteinander verbunden sind, aufgebaut ist. Da diese Stahlplatten erheblichen Kräften ausgesetzt sind, werden sowohl die äußere, als auch die innere Stahlhülle durch aufgeschweißte Verstärkungselemente versteift. Nachteilig an diesen klassischen Konstruktionsteilen wirken sich sowohl die erheblichen Mengen an Stahl aus, die benötigt werden, als auch die zeit- und arbeitsintensive Herstellung. Zudem weisen derartige Konstruktionsteile ein erhebliches Gewicht auf, wodurch sich eine geringere Tonnage der Schiffe und ein erhöhter Treibstoffbedarf ergibt. Zusätzlich sind solche klassischen Konstruktionselemente auf der Basis von Stahl sehr pflegeintensiv, da sowohl die äußeren Oberfläche, als auch die Oberflächen der Stahlteile zwischen der äußeren und inneren Hülle regelmäßig gegen Korrosion geschützt werden müssen.

Als Ersatz für die Stahlkonstruktionen sind SPS-Elemente (Sandwich-plate-system) bekannt, die einen Verbund aus Metall und Kunststoff beinhalten. Durch die Haftung des Kunststoffs an den zwei Metallschichten entstehen Verbundelemente mit außerordentlichen Vorteilen gegenüber bekannten Stahl Konstruktionen. Derartige SPS-Elemente sind bekannt aus den Schriften US 6 050 208, US 5 778 813, DE-A 198 25 083, DE-A 198 25 085, DE-A 198 25 084, DE-A 198 25 087 und DE-A 198 35 727. Üblicherweise werden diese Verbundelemente derart hergestellt, dass die Ausgangsstoffe zur Herstellung der Polyisocyanat-Polyadditionsprodukte in einem einzigen Arbeitsschritt zwischen die Metallplatten gegossen oder gespritzt werden. Da die reaktiven Ausgangskomponenten zur Herstellung der Kunststoffe im Verbundelement bereits beim Vermischen zu reagieren beginnen und ein vollständiges Befüllen des Raumes zwischen den Metallplatten Voraussetzung für ein einwandfreies Produkt ist, stellt der Vorgang der Injektion der Ausgangskomponenten einen entscheidenden und kritischen Schritt bei der Herstellung der Verbundelemente dar.

Der vorliegenden Erfindung lag die Aufgabe zugrunde, ein verbessertes Verfahren zur Herstellung der eingangs dargestellten Verbundelemente zu entwickeln. Mit diesem Verfahren sollte gerade das Befüllen des Raumes zwischen den Platten (i) und (iii) insbesondere mit reaktiven Ausgangskomponenten zur Herstellung von Kunststoffen (ii) zwischen den Platten (i) und (iii) optimiert werden. Dieses Herstellungsverfahren sollte insbesondere den Anteil fehlerhafter Elemente deutlich vermindern und ein sicheres Einbringen von flüssigen Komponenten zwischen die Platten des Verbundelementes ermöglichen. Dabei sollten insbesondere Hohlräume zwischen den Schichten (i) und (iii) vermieden werden, d.h. der zu befüllende Raum zwischen (i) und (iii) sollte möglichst vollständig mit den Ausgangskomponenten zur Herstellung von (ii) gefüllt werden.

Diese Aufgabe wurde erfindungsgemäß dadurch gelöst, dass man die Ausgangsstoffe zur Herstellung von (ii) in flüssigem Zustand in mindestens zwei, bevorzugt zwei Schritten in den Raum zwischen (i) und (iii) füllt, wobei der im letzten Füllvorgang zu befüllende Raum ein Volumen von 0,1 m³ bis 1,5 m³, bevorzugt 0,4 m³ bis 1,0 m³, aufweist und die Höhe des zu befüllenden Raumes kleiner als 25 mm, bevorzugt 10 mm bis 20 mm, ist. Die Höhe des im letzten Füllvorgang zu befüllenden Raumes ergibt sich dem Abstand zwischen dem im vorletzten Befüllung eingetragenen Kunststoff (ii) und der oberen Schicht (i) oder (iii). Bevorzugt werden in jedem Füllvorgang 0,1 m³ bis 1,5 m³, bevorzugt 0,4 m³ bis 1,0 m³, flüssige Ausgangskomponenten zur Herstellung von (ii) eingefüllt. Dabei sind die Schichten (i) und (iii) bevorzugt horizontal ausgerichtet. Die Abweichung von (i) und (iii) von der Horizontalebene beträgt jeweils weniger als 0,5°, bevorzugt 0° bis 0,3°. Nach einer Befüllung (x) führt man den darauf folgenden Füllvorgang (x+1) bevorzugt erst dann durch, wenn die Ausgangskomponenten des vorherigen Füllvorgangs (x) soweit zum Kunststoff (ii) reagiert sind, dass sich die flüssigen Ausgangskomponenten der beiden Füllvorgänge (x) und (x+1) nicht miteinander mischen können. Der zu befüllende Raum weist bevorzugt eine Breite von 0,5 m bis 4 m, besonders bevorzugt 1 m bis 3 m, eine Länge von 1 m bis 12 m, besonders bevorzugt 4 m bis 8 m und eine Höhe, d.h. einen Abstand zwischen den Schichten (i) und (iii), von 20 mm bis 150 mm, besonders bevorzugt 30 mm bis 60 mm, auf, d.h. die Schichten (i) und (iii) besitzen bevorzugt mindestens ebenfalls die angegebene Länge und Breite.

Das erfindungsgemäße Verfahren zur Befüllung gliedert sich somit bevorzugt in zwei Schritte:

In einem ersten Füllvorgang wird ein Teil des zu befüllenden Raumes mit horizontal ausgerichteten Platten (i) und (iii) mit den flüssigen Ausgangsstoffen gefüllt. Bevor der verbleibende Raum in einem zweiten Füllvorgang vollständig mit weiteren flüssigen Ausgangskomponenten ausgefüllt wird, lässt man die Ausgangskomponenten des ersten Füllvorgangs soweit reagieren, dass die in der zweiten Befüllung zugeführten reaktiven Ausgangsstoffen sich nicht mit den im ersten Füllvorgang zugeführten Stoffen mischen. Bevorzugt beträgt die Zeit zwischen Ende des ersten Füllvorgangs bis zum Beginn der zweiten Befüllung 5 Min bis 120 Min. Anschließend wird im einem zweiten Füllvorgang der verbleibende Raum zwischen dem bereits eingefüllten, zumindest teilweise umgesetzten Ausgangskomponenten zur Herstellung von (ii) mit weiteren Ausgangskomponenten, die von denen des ersten Füllvorgangs gleich oder verschieden sein können, vollständig ausgefüllt.

Dieses erfindungsgemäße Verfahren bietet insbesondere folgende Vorteile:

Mögliche Lufteinschlüsse werden auf ein Minimum reduziert. Damit wird eine maximale Kontaktfläche von (ii) zu (i) bzw. (iii) und damit eine optimale Kraftverteilung bei Belastung der Verbundelemente erreicht. Zudem reduziert man die Exothermie durch die geringere Schichtdicken, womit außerdem der Schrumpf von (ii) verringert und damit die Spannungen im Verbundelement insbesondere an der Kontaktfläche von (ii) zu (i) und (iii) vermieden werden. Die geringere Exothermie verringert zudem den durch Mikro-Luftbläschen erzeugten Innendruck im Verbundelement. Dadurch ist es möglich, die Vorrichtung, die zum Fixieren von (i) und (iii) bei dem Befüllvorgang mit den reaktiven Ausgangskomponenten benötigt wird, einfacher and damit kostengünstiger auszulegen. Weiterhin ist es nunmehr möglich, größere Volumina von (II) zu realisieren, die auf Grund der limitierten Leistung der Polyurethan-Verarbeitungsanlagen mit nur einem Befüllvorgang nicht möglich wären.

Bevorzugt können die Ausgangsstoffe zur Herstellung von (ii) in flüssigem Zustand in den Raum zwischen (i) und (iii) gefüllt werden, wobei man während dieses Füllvorgangs einen Unterdruck in dem zu füllenden Raum zwischen (i) und (iii) erzeugt. Dies bietet den Vorteil, dass insbesondere im letzten Füllvorgang die Flüssigkeit in den Raum "gesaugt" wird und auch kleine Hohlräume mit der Flüssigkeit ausgefüllt werden. Bevorzugt beträgt der Unterdruck in dem zu befüllenden Raum 0,2 bis 0,8 Pa, d.h. der Druck in der zu befüllenden Form ist 0,8 bis 0,2 Pa niedriger als Umgebungsluftdruck. Der Unterdruck, der beispielsweise durch allgemein bekannte Vakuumpumpen erzeugt werden kann, wird bevorzugt dadurch erreicht, dass (i) und/oder (iii) zusätzlich zu der oder den Öffnungen (iv) in (i) und/oder (iii), über die die Ausgangsstoffe zur Herstellung von (ii) eingetragen werden, über mindestens eine weitere Öffnung (v) verfügen, über die der Unterdruck angelegt wird. Bevorzugt wird zwischen einer Vakuumpumpe, die den Unterdruck erzeugt, und der Öffnung (v) in (i) ein Schlauch zwischengeschaltet. Dieser Schlauch kann beispielsweise an (i) gepresst oder verklebt werden. Die Mengen an Ausgangsstoffen zur Herstellung von (ii) sind nur schwierig so zu bemessen, dass im letzten Füllvorgang gerade der zu befüllende Raum (R) gefüllt wird, aber ein Überlaufen verhindert wird. Deshalb wird im letzten Füllvorgang bevorzugt eine größere Menge an Ausgangskomponenten zur Herstellung von (ii) in den Raum zwischen (i) und (iii) gegeben, als dieser aufnehmen kann. Der resultierende Überlauf wird bevorzugt über Öffnungen (v) abgeführt. Sobald der Raum zwischen (i) und (iii) mit den Ausgangskomponenten zur Herstellung von (ii) vollständig gefüllt ist, kann anhand eines Anstiegs der Flüssigkeit im Schlauch, der bevorzugt transparent ist, die Befüllung beendet und die Öffnungen (iv) und (v) verschlossen werden. Das Verschließen der Öffnungen kann beispielsweise mit einem Kunststoff - oder Metallpfropfen bevorzugt mit einem Schraubverschluss, der sich entweder im Überlaufgefäß oder bevorzugt zwischen Überlaufgefäß und (i) und/oder (iii) befindet, erfolgen. Die Öffnungen (iv) bleiben bevorzugt bis zum Ende des Aushärtevorgangs der Mischung (a) und (b) durch den fixierten Mischkopf verschlossen. Bevorzugt weist der zu befüllende Raum zwischen (i) und (iii) lediglich die Öffnungen (iv) und (v) auf, wobei sich an (iv) das Ausflussende, bevorzugt Mischkopf befindet und an (v) der bevorzugte Unterdruck angelegt werden kann. Da nach dieser bevorzugten Ausführungsform keine Luft in den zu befüllenden Raum gelangen kann, ist es möglich, einen Unterdruck zu erzeugen.

Üblicherweise weisen die Schichten (i) und (iii) keine Merkmale auf, die zu einer Befestigung eines Ausflussendes zur Befüllung des Raumes zwischen (i) und (iii) mit Flüssigkeiten dienen können. Bei dem Ausdruck "Ausflussende" kann es sich um übliche Einrichtungen handeln, mit Hilfe derer Flüssigkeiten abgefüllt werden, beispielsweise Tankstutzen, Schlauchenden, Mischköpfe, Statikmischer oder ähnliches. Bevorzugt handelt es sich bei dem Ausflussende um einen Mischkopf. Derartige Mischköpfe sind allgemein bekannt und beispielsweise in Zusammenhang mit üblichen Dosiereinrichtungen für Polyurethansysteme kommerziell erhältlich. Die Befestigung des Ausflussendes, bevorzugt des Mischkopfes kann bevorzugt derart erfolgen, dass das Ausflussende der Fördereinrichtung oder eine Halterung für das Ausflussende der Fördereinrichtung an mindestens drei Stellen, bevorzugt drei bis sechs Stellen, besonders bevorzugt vier oder fünf Stellen mit der Schicht (i) verschraubt wird. Bevorzugt wird die Flüssigkeit durch mindestens eine Öffnung (iv) in (i) und/oder (iii) in den Raum zwischen (i) und (iii) gefüllt. Bevorzugt kann man zur Befestigung beispielsweise eines Mischkopfes Bolzen mit einem Gewinde, die zur Befestigung des Mischkopfes oder einer Halterung für den Mischkopf dienen, in die Schicht (i) schießen. Diese Bolzen können bevorzugt an der vom Gewinde abgewandten Seite spitz zulaufen, um sie einfacher in die Schicht (i) einbringen zu können. Die Bolzen weisen bevorzugt einen Durchmesser von 6 mm bis 20 mm und eine Länge von 8 mm bis 42 mm auf. Das Gewinde, das nach der Fixierung der Bolzen nach außen gerichtet ist, d.h. auf der Seite von (i), die von (iii) abgewandt ist, hat bevorzugt eine Länge von 4 mm bis 30 mm. Das Einbringen der Bolzen erfolgt beispielsweise durch Schießen mit Hilfe eines Bolzenschubwerkzeugs, das kommerziell z.B. bei der Firma Hilti erhältlich ist. Bevorzugt weist (i) somit Gewinde auf, mit Hilfe derer das Ausflussende an der Öffnung (iv), durch die die Flüssigkeit eingefüllt wird, mit (i) verschraubt wird. Bevorzugt kann man zur Verbesserung der Dichtung zwischen dem Ausflussende und der Schicht (i) zwischen der Schicht (i) und dem Mischkopf einen O-Ring aus einem elastischen Material fixieren. Derartige O-Ringe sind allgemein bekannt und können in ihren Abmessungen auf den Durchmesser der Öffnung (iv) und den Mischkopf abgestimmt werden. Bevorzugt fixiert man den Mischkopf somit dicht an der Öffnung (iv) in (i) oder (iii), durch die die Eintragung der Ausgangsstoffe erfolgt.

Besonders bevorzugt befestigt man nicht direkt das Ausflussende mit der Schicht (i), sondern fixiert das Ausflussende an einer Halterung, die mit (i) verschraubt wird. Bei dieser Halterung, die aus üblichen Materialien, beispielsweise Kunststoffen, Holz oder bevorzugt üblichen Metallen bestehen kann, handelt es sich bevorzugt um eine Konstruktion, die über Bohrungen verfügt, durch die die auf (i) fixierten Gewinde geführt und beispielsweise mittels entsprechender Muttern befestigt werden. Außerdem weist die Halterung Befestigungselemente für das Ausflussende auf, beispielsweise Steckverbindungen, Schraubverbindungen oder Kanten, mit denen das Ausflussende durch elastische Bänder mit der Halterung verspannt werden kann. Besonders bevorzugt wird das Ausflussende an mindestens drei Punkten mit der Halterung befestigt, um ein Verkanten zu vermeiden. Bevorzugt wird man somit eine Halterung an mindestens drei Gewinden, die an (i) befestigt sind, verschrauben und an dieser Halterung den Mischkopf fixieren. Die Bolzen können nach Fertigstellung der Verbundelemente beispielsweise an der Oberfläche von (i) abgesägt werden.

Das Befüllen des Raumes zwischen (i) und (iii) kann mit üblichen Fördereinrichtungen, bevorzugt kontinuierlich, durchgeführt werden, beispielsweise mit Hoch- und Niederdruckmaschinen, vorzugsweise Hochdruckmaschinen. Bevorzugt erfolgt das Befüllen mit einer Hochdruckmaschine über einen oder mehrere, bevorzugt einen Mischkopf, in dem die Ausgangskomponenten vermischt werden. Die Befüllung des Raumes zwischen (i) und (iii) kann sowohl in vertikaler Ausrichtung von (i) und (iii) erfolgen, als auch in der bereits beschrieben und bevorzugten horizontalen Ausrichtung von (i) und (iii).

Die Schichten (i) und (iii) können bevorzugt als übliche Kunststoff-, Holz- oder bevorzugt Metallplatten, beispielsweise Eisen-, Stahl-, Kupfer- und/oder Aluminium-platten, mit den erfindungsgemäßen Dicken eingesetzt werden. Sowohl (i) als auch (iii) können beschichtet, beispielsweise grundiert, geprimert, lackiert und/oder mit üblichen Kunststoffen beschichtet bei der Herstellung der erfindungsgemäßen Verbundelemente eingesetzt werden. Bevorzugt werden (i) und (iii) unbeschichtet eingesetzt. Die Oberflächen von (i) und (iii) können vor der Herstellung der Verbundelemente zur Reinigung und Erhöhung der Oberflächenrauhigkeit mit Sand oder Stahlkugeln bevorzugt mit Korund oder Eisenkies gestrahlt werden. Dieses Strahlen kann nach den üblichen Verfahren erfolgen, bei denen das Strahlgut beispielsweise unter hohem Druck auf die Oberflächen auftrifft. Geeignete Apparaturen für eine solche Behandlung sind kommerziell erhältlich. Durch diese Behandlung der Oberflächen von (i) und (iii), die nach der Umsetzung von (a) mit (b) in Kontakt mit (ii) stehen, führt zu einer deutlich verbesserten Haftung von (ii) an (i) und (iii). Das Strahlen wird bevorzugt direkt vor der Einbringung der Komponenten zur Herstellung von (ii) in den Raum zwischen (i) und (iii) durchgeführt. Die Oberflächen von (i) und (iii), an die (ii) haften soll, sind bevorzugt frei von anorganischen und/oder organischen Stoffen, die eine Haftung vermindern, beispielsweise Staub, Schmutz, Ölen und Fetten oder allgemein als Formtrennmitteln bekannten Stoffen.

Bevorzugt sind die Schichten (i) und (iii) parallel angeordnet. Die seitlichen Ränder des Raumes zwischen (i) und (iii), der mit (ii) ausgefüllt wird, werden bevorzugt abgedichtet, bevorzugt mit Kunststoff-, Papier- oder Metallfolien oder -platten, besonders bevorzugt Metallplatten, die beispielsweise verklebt, verschweißt oder angepresst, bevorzugt angeschweißt, werden und die gegebenenfalls auch als Abstandshalter dienen können.

Bevorzugt kann man den zu befüllenden Raum trocknen. Dies bietet den Vorteil, dass insbesondere zu befüllende flüssige Komponenten, die gegenüber Wasser reaktiv sind, beispielsweise Isocyanate, nicht in unerwünschten Nebenreaktion abreagieren. Das Trocknen, das bevorzugt direkt vor dem Befüllen stattfindet, kann beispielsweise mittels heißer Luft oder mittels Pressluft erfolgen. Des weiteren kann man den zu befüllenden Raum zwischen (i) und (iii) durch eine Erwärmung von (i) und/oder (iii) auf eine Temperatur von 20°C bis 150°C für eine Dauer von 10 min bis 180 min trocknen. Bevorzugt kann man den zu befüllenden Raum zwischen (i) und (iii) durch ein Gebläse trocknen, das Luft durch Öffnungen (iv) und (v) in (i) und/oder (iii) durch den zu befüllenden Raum zwischen (i) und (iii) leitet.

Bevorzugt handelt es sich bei den Öffnungen (iv) und (v) um Bohrungen in (i) und/oder (iii) mit einem Durchmesser von 0,5 cm bis 5,0 cm.

Der Raum, der zwischen (i) und (iii) mit den Ausgangsstoffen zur Herstellung von (ii) gefüllt wird, muss nicht den ganzen Raum zwischen (i) und (iii) darstellen. Sowohl (i) als auch (iii) können an den Rändern über (ii) überstehen, d.h. nur in einem Teilbereich von (i) und (iii) erfolgt eine Bindung von (i) über (ii) an (iii). Beispielsweise kann der Raum zwischen (i) und (iii) vor der Befüllung mit den Ausgangsstoffen derart abgedichtet werden, dass sich die Dichtung innerhalb des von (i) und (iii) umschlossenen Raumes befindet und Ränder von (i) und/oder (iii) überstehen.

Die Förderleistung kann in Abhängigkeit des zu befüllenden Volumens variiert werden. Um eine homogene Durchhärtung von (ii) zu gewährleisten, wird die Förderleistung und Fördereinrichtung bevorzugt derart gewählt, dass der zu befüllende Raum innerhalb von 0,5 bis 20 min mit den Komponenten zur Herstellung von (ii) gefüllt werden kann. Bevorzugt handelt es sich um Niederdruck oder besonders bevorzugt Hochdruckmaschinen, bevorzugt mit Kolbendosierung, besonders bevorzugt Axialkolbendosierung, wobei bevorzugt der Vorratsbehälter mit Rührwerk und bevorzugt temperierbar ausgestaltet ist und bevorzugt ein Kreislauf Vorratsbehälter-Mischkopf-Vorratsbehälter vorliegt, wobei bevorzugt die Austragsleistung 0,1 bis 3,0 kg/sec beträgt.

Bei der Entwicklung geeigneter Herstellungsverfahren wurde festgestellt, dass ein unkontrolliertes Herauslaufen von flüssigen Ausgangskomponenten zur Herstellung von (ii) kaum als Fehler zu beheben ist. Aufgrund der limitierten Menge pro Schuss führt ein unkontrollierter Verlust an Ausgangsmaterial zur Herstellung von (ii) zu einer unvollständigen Befüllung des Raumes zwischen (i) und (iii). Aufgrund der schnellen Reaktion und der sehr guten Haftung von (ii) an (i) und (iii) entstehen durch eine unvollständige Befüllung weite Bereiche im Verbundelement, die kein (ii) enthalten und auch nicht mehr mit Ausgangskomponenten aufgefüllt werden können. Derartige Verbundelemente müssen leider verworfen werden. Um ein Verlust an Ausgangskomponenten zu verhindern, hat es sich daher als vorteilhaft erwiesen, die zu befüllende Form sehr genau auf ihre Dichtigkeit zu überprüfen. Üblicherweise werden die Schichten (i) und (iii) in geeigneter Anordnung, beispielsweise parallel zueinander, fixiert. Der Abstand wird üblicherweise so gewählt, dass der Raum (R) zwischen (i) und (iii) eine Dicke von 10 bis 300 mm aufweist. Die Fixierung von (i) und (iii) kann beispielsweise durch Abstandshalter z.B. in einer Form oder geeigneten Halterung erfolgen. Die Ränder des Zwischenraumes werden üblicherweise derart abgedichtet, dass der Raum zwischen (i) und (iii) zwar mit der Flüssigkeit bzw. den Ausgangskomponenten zur Herstellung von (ii) vollständig gefüllt werden kann, ein Herausfließen dieser Ausgangskomponenten vor der vollständigen Befüllung aber verhindert wird. Das Abdichten kann mit üblichen Kunststoff-, Papier- oder Metallfolien und/oder -platten, die beispielsweise verklebt, verschweißt oder angepresst werden und die gegebenenfalls auch als Abstandshalter dienen können, erfolgen. Dieses bevorzugte Abdichten bezieht sich nicht auf die bevorzugten Öffnungen (iv) und (v), die eingangs dargestellt wurden. Die Überprüfung der Dichtigkeit von (R) vor der Befüllung mit den Ausgangskomponenten erfolgt bevorzugt durch Druckdifferenzmessung. Unter dem Ausdruck Druckdifferenzmessung ist zu verstehen, dass man versucht, eine Druckdifferenz zwischen dem Raum (R) und der äußeren Umgebung über einen bestimmten Zeitraum aufzubauen, beispielsweise indem man versucht, in (R) einen Unter- oder Überdruck im Verhältnis zur äußeren Umgebung zu erreichen. Dies kann durch übliche Vakuumpumpen oder allgemein bekannte Kompressoren, die Luft oder Gas in den Raum (R) pumpen, erreicht werden. Kann ein stabiler Über- oder Unterdruck in (R) erzeugt werden, so deutet dies auf eine ausreichend dichte Kavität hin, die mit den Ausgangskomponenten zur Herstellung von (ii) gefüllt werden kann. Dabei ist bevorzugt zu beachten, dass man die Öffnungen (iv) bzw. (v), die man zum Befüllen von (R) mit den Ausgangskomponenten bzw. als Entlüftungsöffnungen bzw. als Überlauföffnungen zum Austritt von überschüssigen Ausgangskomponenten vorsieht, ebenfalls vorübergehend abdichtet. Dabei kann gegebenenfalls mindestens eine dieser Öffnungen dazu dienen, Vakuumpumpe oder Kompressor an (R) anzuschließen.

Die zu befüllende Form besteht bevorzugt aus den angegebenen Schichten (i) und (iii), die bevorzugt parallel angeordnet sind, sowie bevorzugt aus Abdichtungen zwischen den Schichten (i) und (iii), die ein Herauslaufen der Flüssigkeit beim Einfüllen verhindern. Die Schicht (ii) ist somit bevorzugt haftend zwischen den Schichten (i) und (iii) angeordnet.

Bevorzugt enthält die Flüssigkeit zur Herstellung von (ii) (a) Isocyanate und (b) gegenüber Isocyanaten reaktive Verbindungen. Die Schicht (ii) stellt somit bevorzugt Polyisocyanat-Polyadditionsprodukte dar. In dieser Schrift sind unter den Ausdrücken "Ausgangsstoffe" oder "Ausgangskomponenten" insbesondere (a) Isocyanate und (b) gegenüber Isocyanaten reaktive Verbindungen zu verstehen, aber gegebenenfalls, soweit sie zum Einsatz kommen, auch (c) Gase, (d) Katalysatoren, (e) Hilfsmittel und/oder (f) Treibmittel.

Bevorzugt führt man die Umsetzung von (a) mit (b) zu (ii) in Gegenwart von 1 bis 50 Volumen-% Gase (c) durch. Bevorzugt setzt man als (b) Polymerpolyole ein. Bevorzugt führt man die Umsetzung von (a) mit (b) in Gegenwart von (f) Treibmitteln durch.

Die Ausgangskomponenten zur Herstellung der Polyisocyanat-Polyadditionsprodukte werden üblicherweise bei einer Temperatur von 0 bis 100°C, vorzugsweise von 20 bis 60°C, gemischt und wie bereits beschrieben in den Raum zwischen (i) und (iii) eingebracht. Die Vermischung kann mechanisch mittels eines Rührers oder einer Rührschnecke, bevorzugt aber durch das bei Hochdruckmaschinen übliche Gegenstromprinzip erfolgen, bei dem A- und B-Komponenten-Strahl sich im Mischkopf unter jeweils hohem Druck treffen und vermischen, wobei der Strahl einer jeden Komponente auch geteilt sein kann. Die Reaktionstemperatur, d.h. die Temperatur, bei die Umsetzung erfolgt, beträgt in Abhängigkeit von der Materialdicke üblicherweise > 20°C, bevorzugt 50 bis 150°C.

Die Polyisocyanat-Polyadditionsprodukte (ii) der erfindungsgemäß hergestellten Verbundelemente weisen bevorzugt ein Elastizitätsmodul von >275 MPa im Temperaturbereich von -45 bis +50°C (nach DIN 53 457), eine Adhäsion zu (i) und (iii) von >4 MPa (nach DIN 53 530), eine Dehnung von >30 % im Temperaturbereich von -45 bis +50°C (nach DIN 53 504), eine Zugfestigkeit von >20 MPa (nach DIN 53 504) und eine Druckfestigkeit von >20 MPa (nach DIN 53 421) auf.

Die Herstellung der erfindungsgemäßen Verbundelemente kann man somit bevorzugt derart durchführen, dass man zwischen (i) und (iii) Polyisocyanat-Polyadditionsprodukte (ii), üblicherweise Polyurethane, die gegebenenfalls Harnstoff- und/oder Isocyanuratstrukturen aufweisen können, durch Umsetzung von (a) Isocyanaten mit (b) gegenüber Isocyanaten reaktiven Verbindungen gegebenenfalls in Gegenwart von Treibmitteln (f), 1 bis 50 Volumen-%, bezogen auf das Volumen der Polyisocyanat-Polyadditionsprodukte, mindestens eines Gases (c), (d) Katalysatoren und/oder (e) Hilfsmittel herstellt, wobei bevorzugt (ii) an (i) und (iii) haftet. Die Herstellung derartiger Polyisocyanat-Polyadditionsprodukte (ii) ist vielfach beschrieben worden.

Die Ausgangsstoffe (a), (b), (c), (d), (e) und (f) in dem erfindungsgemäßen Verfahren werden im Folgenden beispielhaft beschrieben:

Als Isocyanate (a) kommen die an sich bekannten aliphatischen, cycloaliphatischen, araliphatischen und/oder aromatischen Isocyanate, bevorzugt Diisocyanate in Frage, die gegebenenfalls nach allgemein bekannten Verfahren biuretisiert und/oder isocyanuratisiert worden sein können. Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5, Tetramethylendiisocyanat-1,4, Lysinesterdiisocyanate (LDI), Hexamethylendiisocyanat-1,6 (HDI), Cyclohexan-1,3- und/oder 1,4-diisocyanat, 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, 1-Isocyanato-3,3,5-trimethyl-5-isocyanatomethylcyclohexan (IPDI), 2,4- und/oder 2,6-Toluylendiisocyanat (TDI), 4,4'-, 2,4'- und/oder 2,2'-Diphenylmethandiisocyanat (MDI), Polyphenylpolymethylen-polyisocyanate und/oder Mischungen enthaltend mindestens zwei der genannten Isocyanate. Außerdem können Ester-, Harnstoff-, Allophanat-, Carbodiimid-, Uretdion- und/oder Urethangruppen enthaltende Di- und/oder Polyisocyanate in dem erfindungsgemäßen Verfahren eingesetzt werden. Bevorzugt werden 2,4'-, 2,2'- und/oder 4,4'-MDI und/oder Polyphenylpolymethylen-polyisocyanate eingesetzt, besonders bevorzugt Mischungen enthaltend Polyphenylpolymethylen-polyisocyanate und mindestens eines der MDI-Isomere.

Als (b) gegenüber Isocyanaten reaktive Verbindungen können beispielsweise Verbindungen eingesetzt werden, die als gegenüber Isocyanaten reaktive Gruppen Hydroxyl-, Thiol- und/oder primäre und/oder sekundäre Aminogruppen aufweisen und üblicherweise ein Molekulargewicht von 60 bis 10000 g/mol aufweisen, z.B. Polyole ausgewählt aus der Gruppe der Polymerpolyole, Polyetherpolyalkohole, Polyesterpolyalkohole, Polythioether-polyole, hydroxylgruppenhaltigen Polyacetale und hydroxylgruppenhaltigen aliphatischen Polycarbonate oder Mischungen aus mindestens zwei der genannten Polyole. Diese Verbindungen weisen üblicherweise eine Funktionalität gegenüber Isocyanaten von 2 bis 6 und ein Molekulargewicht von 400 bis 8000 auf und sind dem Fachmann allgemein bekannt.

Beispielsweise kommen als Polyetherpolyalkohole Verbindungen in Frage, die nach bekannter Technologie durch Anlagerung von Alkylenoxiden, beispielsweise Tetrahydrofuran, 1,3-Propylenoxid, 1,2- bzw. 2,3-Butylenoxid, Styroloxid und vorzugsweise Ethylenoxid und/oder 1,2-Propylenoxid an übliche Startersubstanzen erhältlich sind. Als Startersubstanzen können beispielsweise bekannte aliphatische, araliphatische, cycloaliphatische und/oder aromatische Verbindungen eingesetzt werden, die mindestens eine, bevorzugt 2 bis 4 Hydroxylgruppen und/oder mindestens eine, bevorzugt 2 bis 4 Aminogruppen enthalten. Beispielsweise können als Startersubstanzen Ethandiol, Diethylenglykol, 1,2- bzw. 1,3-Propandiol, 1,4-Butandiol, 1,5-Pentandiol, 1,6-Hexandiol, 1,7-Heptandiol, Glycerin, Trimethylolpropan, Neopentylglykol, Zucker, beispielsweise Saccharose, Pentaerythrit, Sorbitol, Ethylendiamin, Propandiamin, Neopentandiamin, Hexamethylendiamin, Isophorondiamin, 4,4'-Diaminodicyclohexylmethan, 2-(Ethylamino)ethylamin, 3-(Methylamino)propylamin, Diethylentrimamin, Dipropylentriamin und/oder N,N'-Bis(3-aminopropyl)-ethylendiamin eingesetzt werden.

Die Alkylenoxide können einzeln, alternierend nacheinander oder als Mischungen verwendet werden. Bevorzugt werden Alkylenoxide verwendet, die zu primären Hydroxylgruppen in dem Polyol führen. Besonders bevorzugt werden als Polyole solche eingesetzt, die zum Abschluss der Alkoxylierung mit Ethylenoxid alkoxyliert wurden und damit primäre Hydroxylgruppen aufweisen.

Als Polymerpolyole, einer speziellen Klasse der Polyetherpolyole, können allgemein aus der Polyurethanchemie bekannte Verbindungen eingesetzt werden, bevorzugt Styrol-Acrylnitril-Pfropfpolyole. Gerade der Einsatz von Polymerpolyolen kann den Schrumpf des Polyisocyanat-Polyadditionsproduktes, beispielsweise des Polyurethans deutlich vermindern und somit zu einer verbesserten Haftung von (ii) an (i) und (iii) führen. Gegebenenfalls können als weiteren Maßnahmen, den Schrumpf zu verringern, bevorzugt Treibmittel (f) und/oder Gase (c) eingesetzt werden. Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Die Polyesterpolyole besitzen vorzugsweise eine Funktionalität von 2 bis 4, insbesondere 2 bis 3, und ein Molekulargewicht von 480 bis 3000, vorzugsweise 600 bis 2000 und insbesondere 600 bis 1500.

Die erfindungsgemäßen Verbundelemente werden bevorzugt unter Verwendung von Polyetherpolyalkoholen als Komponente (b) zur Umsetzung mit den Isocyanaten hergestellt, zweckmäßigerweise solche mit einer mittleren Funktionalität gegenüber Isocyanaten von 1,5 bis 8, bevorzugt 2 bis 6, und einem Molekulargewicht von 400 bis 8000.

Die Verwendung von Polyetherpolyalkoholen bietet erhebliche Vorteile durch eine verbesserte Stabilität der Polyisocyanat-Polyadditionsprodukte gegen eine hydrolytische Spaltung und aufgrund der geringeren Viskosität, jeweils im Vergleich mit Polyesterpolyalkoholen. Die verbesserte Stabilität gegen Hydrolyse ist insbesondere bei einem Einsatz im Schiffbau vorteilhaft. Die geringere Viskosität der Polyetherpolyalkohole und der Reaktionsmischung zur Herstellung von (ii) enthaltend die Polyetherpolyalkohle ermöglicht eine schnellere und einfachere Befüllung des Raumes zwischen (i) und (iii) mit der Reaktionsmischung zur Herstellung der Verbundelemente. Aufgrund der erheblichen Abmessungen insbesondere von Konstruktionsteilen im Schiffbau sind niedrigviskose Flüssigkeiten von erheblichem Vorteil.

Als gegenüber Isocyanaten reaktive Verbindungen können des weiteren zusätzlich zu den genannten Verbindungen mit einem üblichen Molekulargewicht von 400 bis 8000 gegebenenfalls Diole und/oder Triole mit Molekulargewichten von 60 bis <400 als Kettenverlängerungs- und/oder Vernetzungsmittel bei dem erfindungsgemäßen Verfahren eingesetzt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Die Kettenverlängerungs- und/oder Vernetzungsmittel weisen vorzugsweise ein Molekulargewicht von 60 bis 300 auf. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan, niedermolekulare hydroxylgruppenhaltige Polyalkylenoxide auf Basis Ethylen- und/oder 1,2-Propylenoxid und den vorgenannten Diolen und/oder Triolen als Startermoleküle und/oder Diamine wie z.B. Diethyltoluendiamin und/oder 3,5-Dimethylthio-2,4-toluenediamin.

Sofern zur Herstellung der Polyisocyaynat-Polyadditionsprodukten Kettenverlängerungsmittel, Vernetzungsmittel oder Mischungen davon Anwendung finden, kommen diese zweckmäßigerweise in einer Menge von 0 bis 30 Gew.-%, vorzugsweise von 1 bis 30 Gew.-%, bezogen auf das Gewicht der insgesamt eingesetzten gegenüber Isocyanaten reaktiven Verbindungen (b), zum Einsatz.

Außerdem können als (b) aliphatische, araliphatische, cycloaliphatische und/oder aromatische Carbonsäuren zur Optimierung des Härtungsverlaufes bei der Herstellung von (ii) eingesetzt werden. Beispiele für solche Carbonsäuren sind Ameisensäure, Essigsäure, Bernsteinsäure, Oxalsäure, Malonsäure, Glutarsäure, Adipinsäure, Zitronensäure, Benzoesäure, Salicylsäure, Phenylessigsäure, Phthalsäure, Toluolsulfonsäure, Derivate der genannten Säuren, Isomere der genannten Säuren und beliebigen Mischungen der genannten Säuren. Der Gewichtsanteil dieser Säuren kann 0 bis 5 Gew.-%, bevorzugt 0,2 bis 2 Gew.-%, bezogen auf das Gesamtgewicht von (b), betragen. Mit dem Einsatz von Amin-gestarteten Polyetherpolyalkoholen kann zudem das Durchhärteverhalten von der Reaktionsmischung zur Herstellung von (ii) verbessert werden. Bevorzugt werden die Verbindungen (b), wie auch die anderen Komponenten zur Herstellung von (ii), mit einem möglichst geringen Gehalt an Wasser eingesetzt, um die Bildung von Kohlendioxid durch Reaktion des Wassers mit Isocyanatgruppen zu vermeiden.

Als Komponente (c) zur Herstellung von (ii) können allgemein bekannte Verbindungen eingesetzt werden, die einen Siedepunkt bei einem Druck von 1 bar von kleiner (d.h. bei niedrigeren Temperaturen als) -50°C aufweisen, beispielsweise Luft, Kohlendioxid, Stickstoff, Helium und/oder Neon. Bevorzugt wird Luft eingesetzt. Die Komponente (c) ist bevorzugt gegenüber der Komponente (a), besonders bevorzugt gegenüber den Komponenten (a) und (b) inert, d.h. eine Reaktivität des Gases gegenüber (a) und (b) ist kaum, bevorzugt nicht nachzuweisen. Der Einsatz des Gases (c) unterscheidet sich grundlegend von dem Einsatz üblicher Treibmittel zur Herstellung von geschäumten Polyurethanen. Während übliche Treibmittel (f) flüssig eingesetzt werden (oder im Falle der gasförmigen physikalischen Treibmittel in der Polyol-Komponente bis zu einem geringen Prozentsatz löslich sind) und während der Umsetzung entweder aufgrund der Wärmeentwicklung verdampfen oder aber im Falle des Wassers aufgrund der Reaktion mit den Isocyanatgruppen gasförmiges Kohlendioxid entwickeln, wird in der vorliegenden Erfindung die Komponente (c) bevorzugt bereits gasförmig als Aerosol beispielsweise in der Polyolkomponente eingesetzt.

Als Katalysatoren (d) können allgemein bekannte Verbindungen eingesetzt werden, die die Reaktion von Isocyanaten mit den gegenüber Isocyanaten reaktiven Verbindungen stark beschleunigen, wobei vorzugsweise ein Gesamtkatalysatorgehalt von 0,001 bis 15 Gew.-%, insbesondere 0,05 bis 6 Gew.-%, bezogen auf das Gewicht der insgesamt eingesetzten gegenüber Isocyanaten reaktiven Verbindungen, verwendet wird. Beispielsweise können folgende Verbindungen verwendet werden: Triethylamin, Tributylamin, Dimethylbenzylamin, Dicyclohexylmethylamin, Dimethylcyclohexylamin, N,N,N',N'-Tetramethyl-diamino-diethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,2-Dimethylimidazol, 1-Azabicyclo-(2,2,0)-octan, 1,4-Diazabicyclo-(2,2,2)-octan (Dabco) und Alkanolaminverbindungen, wie Triethanolamin, Triisopropanolamin, N-Methyl- und N-Ethyl-diethanolamin, Dimethylaminoethanol, 2-(N,N-Dimethylaminoethoxy)ethanol, N,N',N"-Tris-(dialkylaminoalkyl)hexahydrotriazine, z.B. N,N',N"-Tris-(dimethylaminopropyl)-s-hexahydrotriazin, Eisen(II)-chlorid, Zinkchlorid, Bleioctoat und vorzugsweise Zinnsalze, wie Zinndioctoat, Zinndiethylhexoat, Dibutylzinndilaurat und/oder Dibutyldilaurylzinnmercaptid, 2,3-Dimethyl-3,4,5,6-tetrahydropyrimidin, Tetraalkylammoniumhydroxide, wie Tetramethylammoniumhydroxid, Alkalihydroxide, wie Natriumhydroxid, Alkalialkoholate, wie Natriummethylat und Kaliumisopropylat, und/oder Alkalisalze von langkettigen Fettsäuren mit 10 bis 20 C-Atomen und gegebenenfalls seitenständigen OH-Gruppen.

Es hat sich als sehr vorteilhaft erwiesen, die Herstellung von (ii) in Gegenwart von (d) durchzuführen, um die Reaktion zu beschleunigen.

Der Reaktionsmischung zur Herstellung der Polyisocyanat-Polyadditionsprodukte (ii) können gegebenenfalls (e) Hilfsmittel einverleibt werden. Genannt seien beispielsweise Füllstoffe, oberflächenaktive Substanzen, Farbstoffe, Pigmente, Flammschutzmittel, Hydrolyseschutzmittel, fungistatische, bakteriostatisch wirkende Substanzen und Schaumstabilisatoren.

Als oberflächenaktive Substanzen kommen z.B. Verbindungen in Betracht, welche zur Unterstützung der Homogenisierung der Ausgangsstoffe dienen und gegebenenfalls auch geeignet sind, die Struktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure. Die oberflächenaktiven Substanzen werden üblicherweise in Mengen von 0,01 bis 5 Gew.-%, bezogen auf 100 Gew.-% der insgesamt eingesetzten gegenüber Isocyanaten reaktiven Verbindungen (b), angewandt.

Geeignete Flammschutzmittel sind beispielsweise Trikresylphosphat,Tris-(2-chlorethyl)phosphat, Tris-(2-chlorpropyl)-phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im allgemeinen hat es sich als zweckmäßig erwiesen, 5 bis 50 Gew.-%, vorzugsweise 5 bis 25 Gew.-%, der genannten Flammschutzmittel, bezogen auf das Gewicht der insgesamt eingesetzten gegenüber Isocyanaten reaktiven Verbindungen, zu verwenden.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und Glasfasern geringer Länge. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern. Die anorganischen und organischen Füllstoffe können einzeln oder als Gemische verwendet werden.

Bevorzugt setzt man bei der Herstellung von (ii) 10 bis 70 Gew.-% Füllstoffe, bezogen auf das Gewicht von (ii), als (e) Hilfsmittel ein. Als Füllstoffe verwendet man bevorzugt Talkum, Kaolin, Calciumcarbonat, Schwerspat, Glasfasern und/oder Mikroglaskugeln. Die Größe der Partikel der Füllstoffe ist bevorzugt so zu wählen, daß das Eintragen der Komponenten zur Herstellung von (ii) in den Raum zwischen (i) und (iii) nicht behindert wird. Besonders bevorzugt weisen die Füllstoffe Partikelgrößen von <0,5 mm auf.

Die Füllstoffe werden bevorzugt in Mischung mit der Polyolkomponente bei der Umsetzung zur Herstellung der Polyisocyanat-Polyadditionsprodukte eingesetzt.

Die Füllstoffe können dazu dienen, den im Vergleich beispielsweise zum Stahl größeren thermischen Ausdehnungskoeffizient der Polyisocyanat-Polyadditionsprodukte zu verringern und damit dem des Stahls anzupassen. Dies für einen nachhaltig festen Verbund zwischen den Schichten (i), (ii) und (iii) besonders vorteilhaft, da damit geringere Spannungen zwischen den Schichten bei thermischer Belastung auftreten.

Bevorzugt werden zur Herstellung von (ii) als (e) übliche Schaumstabilisatoren eingesetzt, die kommerziell erhältlich und dem Fachmann allgemein bekannt sind, beispielsweise allgemein bekannte Polysiloxan-Polyoxyalkylen-Blockcopolymere, z.B. Tegostab 2219 der Firma Goldschmidt. Der Anteil an diesen Schaumstabilisatoren bei der Herstellung von (ii) beträgt bevorzugt 0,001 bis 10 Gew.-%, besonders bevorzugt 0,01 bis 10 Gew.-%, insbesondere 0,01 bis 2 Gew.-%, bezogen auf das Gewicht der zur Herstellung von (ii) eingesetzten Komponenten (b), (e) und gegebenenfalls (d). Der Einsatz dieser Schaumstabilisatoren bewirkt, das die Komponente (c) in der Reaktionsmischung zur Herstellung von (ii) stabilisiert wird.

Als Treibmittel (f) können aus der Polyurethanchemie allgemein bekannte Treibmittel eingesetzt werden, beispielsweise physikalische und/oder chemische Treibmittel. Derartige physikalische Treibmittel weisen im allgemeinen einen Siedepunkt bei einem Druck von 1 bar von größer (d.h. bei höheren Temperaturen als) -50°C auf. Beispiele für physikalische Treibmittel sind z.B. FCKW, HFCKW, HFKW, aliphatische Kohlenwasserstoffe, cycloaliphatische Kohlenwasserstoffe, jeweils beispielsweise mit 4 bis 6 Kohlenstoffatomen oder Gemische dieser Stoffe, beispielsweise Trichlorfluormethan (Siedepunkt 24°C), Chlordifluormethan (Siedepunkt -40,8°C), Dichlorfluorethan (Siedepunkt 32°C), Chlordifluorethan (Siedepunkt -9,2°C), Dichlortrifluorethan (Siedepunkt 27,1°C), Tetrafluorethan (Siedepunkt -26,5°C), Hexafluorbutan (Siedepunkt 24,6°C), iso-Pentan (Siedepunkt 28°C), n-Pentan (Siedepunkt 36°C), Cyclopentan (Siedepunkt 49°C).

Als chemische Treibmittel, d.h. Treibmittel die aufgrund einer Reaktion, beispielsweise mit Isocyanatgruppen, gasförmige Produkte bilden, kommen beispielsweise Wasser, Hydratwasser haltige Verbindungen, Carbonsäuren, tert.-Alkohole, z.B. t-Butanol, Carbamate, beispielsweise die in der Schrift EP-A 1000955, insbesondere auf den Seiten 2, Zeilen 5 bis 31 sowie 3, Zeilen 21 bis 42 beschrieben Carbamate, Carbonate, z.B. Ammoniumcarbonat und/oder Ammoniumhydrogencarbonat und/oder Guanidincarbamat in Betracht.

Bevorzugt werden als Treibmittel (f) Wasser und/oder Carbamate eingesetzt.

Bevorzugt werden die Treibmittel (f) in einer Menge eingesetzt, die ausreicht, um die bevorzugte Dichte von (ii) von 350 bis 1200 kg/m³ zu erhalten. Dies kann mit einfachen Routineexperimenten, die dem Fachmann allgemein geläufig sind, ermittelt werden. Besonders bevorzugt werden die Treibmittel (f) in einer Menge von 0,05 bis 10 Gew.-%, insbesondere von 0,1 bis 5 Gew.-%, jeweils bezogen auf das Gesamtgewicht der Polyisocyanat-Polyadditionsprodukte, eingesetzt.

Das Gewicht von (ii) entspricht per Definition dem Gewicht der zur Herstellung von (ii) eingesetzten Komponenten (a), (b) und gegebenenfalls (c), (d), (e) und/oder (f).

Zur Herstellung der erfindungsgemäßen Polyisocyanat-Polyadditionsprodukte werden die Isocyanate und die gegenüber Isocyanaten reaktiven Verbindungen in solchen Mengen zur Umsetzung gebracht, daß das Äquivalenzverhältnis von NCO-Gruppen der Isocyanate (a) zur Summe der reaktiven Wasserstoffatome der gegenüber Isocyanaten reaktiven Verbindungen (b) und gegebenenfalls (f) 0,85 bis 1,25 : 1, vorzugsweise 0,95 bis 1,15 : 1 und insbesondere 1 bis 1,05 : 1, beträgt. Falls (ii) zumindest teilweise Isocyanuratgruppen gebunden enthalten, wird üblicherweise ein Verhältnis von NCO-Gruppen zur Summe der reaktiven Wasserstoffatome von 1,5 bis 60 : 1, vorzugsweise 1,5 bis 8 : 1, angewandt.

Die Polyisocyanat-Polyadditionsprodukte werden üblicherweise nach dem one shot-Verfahren oder nach dem Prepolymerverfahren, beispielsweise mit Hilfe der Hochdruck- oder Niederdruck-Technik hergestellt.

Als besonders vorteilhaft hat es sich erwiesen, nach dem Zweikomponentenverfahren zu arbeiten und die gegenüber Isocyanaten reaktiven Verbindungen (b), gegebenenfalls die Treibmittel (f) und gegebenenfalls die Katalysatoren (d) und/oder Hilfsmittel (e) in der Komponente (A) (Polyolkomponente) zu vereinigen und bevorzugt innig miteinander zu vermischen und als Komponente (B) die Isocyanate (a) zu verwenden.

Die Komponente (c) kann der Reaktionsmischung enthaltend (a), (b) und gegebenenfalls (f), (d) und/oder (e) zugeführt werden, und/oder den einzelnen, bereits beschriebenen Komponenten (a), (b), (A) und/oder (B). Die Komponente, die mit (c) gemischt wird, liegt üblicherweise flüssig vor. Bevorzugt wird die Komponenten in die Komponente (b) gemischt.

Das Mischen der entsprechenden Komponente mit (c) kann nach allgemein bekannten Verfahren erfolgen. Beispielsweise kann (c) durch allgemein bekannte Beladungseinrichtungen, beispielsweise Luftbeladungseinrichtungen, bevorzugt unter Druck, beispielsweise aus einem Druckbehälter oder durch einen Kompressor komprimiert, z.B. durch eine Düse der entsprechenden Komponente zugeführt werden. Bevorzugt erfolgt eine weitgehende Durchmischung der entsprechende Komponenten mit (c), so daß Gasblasen von (c) in der üblicherweise flüssigen Komponente bevorzugt eine Größe von 0,0001 bis 10, besonders bevorzugt 0,0001 bis 1 mm aufweisen.

Der Gehalt an (c) in der Reaktionsmischung zur Herstellung von (ii) kann in der Rücklaufleitung der Hochdruckmaschine mit allgemein bekannten Messgeräten über die Dichte der Reaktionsmischung bestimmt werden. Die Gehalt an (c) in der Reaktionsmischung kann über eine Kontrolleinheit bevorzugt automatisch auf der Grundlage dieser Dichte reguliert werden. Die Komponentendichte kann während der üblichen Zirkulation des Materials in der Maschine auch bei sehr niedriger Zirkulationsgeschwindigkeit online bestimmt und reguliert werden.

Die erfindungsgemäß erhältlichen Verbundelemente finden Verwendung vor allem in Bereichen, in denen Konstruktionselemente benötigt werden, die großen Kräften standhalten, beispielsweise als Konstruktionsteile im Schiffsbau, z.B. in Schiffsrümpfen, beispielsweise Schiffsdoppelrümpfe mit einer äußeren und einer inneren Wand, und Laderaumabdeckungen, Laderaumtrennwänden, Ladeklappen oder in Bauwerken, beispielsweise Brücken oder als Konstruktionselemente im Hausbau, insbesondere in Hochhäusern.

Die erfindungsgemäßen Verbundelemente sind nicht mit klassischen Sandwichelementen zu verwechseln, die als Kern einen Polyurethan- und/oder Polyisocyanurathartschaumstoff enthalten und üblicherweise zur thermischen Isolierung eingesetzt werden. Derartige bekannte Sandwichelemente wären aufgrund ihrer vergleichsweise geringeren mechanischen Belastbarkeit nicht für die genannten Anwendungsbereiche geeignet.

## Patentansprüche

1. Verfahren zur Herstellung von Verbundelementen, die folgende Schichtstruktur aufweisen:
(i) 2 bis 20 mm Metall, Kunststoff oder Holz,
(ii) 10 bis 300 mm Kunststoff,
(iii) 2 bis 20 mm Metall, Kunststoff oder Holz,
**dadurch gekennzeichnet, dass** man die Ausgangsstoffe zur Herstellung von (ii) in flüssigem Zustand in mindestens zwei Schritten in den Raum zwischen (i) und (iii) füllt, wobei der im letzten Füllvorgang zu befüllende Raum ein Volumen von 0,1 m³ bis 1,5 m³ aufweist und die Höhe des zu befüllenden Raumes kleiner als 25 min ist und wobei die Schichten (i) und (iii) horizontal ausgerichtet sind und eine Abweichung von der Horizontalebene von jeweils weniger als 0,5° aufweisen.

2. Verfahren gemäß Anspruch 1, **dadurch gekennzeichnet, dass** man in jedem Füllvorgang 0,1 m³ bis 1,5 m³ flüssige Ausgangskomponenten zur Herstellung von (ii) einträgt und die Füllhöhe jedes Füllvorgangs kleiner 25 mm ist.

3. Verfahren nach Anspruch 1, **dadurch gekennzeichnet, dass** man nach einer Befüllung den darauf folgenden Füllvorgang erst durchführt, wenn die Ausgangskomponenten soweit zum Kunststoff (ii) reagiert sind, dass sich die flüssigen Ausgangskomponenten der beiden Füllvorgänge nicht miteinander mischen können.

4. Verfahren nach Anspruch 1, **dadurch gekennzeichnet, dass** der zu befüllende Raum eine Breite von 0,5 m bis 4 m, eine Länge von 1 m bis 12 m und eine Höhe, d.h. einen Abstand zwischen den Schichten (i) und (iii), von 20 mm bis 150 mm aufweist.

5. Verfahren gemäß Anspruch 1, **dadurch gekennzeichnet, dass** (ii) Polyisocyanat-Polyadditionsprodukte darstellen erhältlich durch Umsetzung der Ausgangsstoffe (a) Isocyanat und (b) gegenüber Isocyanaten reaktive Verbindungen.

6. Verbundelemente erhältlich durch ein Verfahren gemäß einem der Ansprüche 1 bis 5.

7. Schiffe oder Bauwerke enthaltend Verbundelemente nach Anspruch 6.

## Claims

1. A process for the production of composite elements which have the following layers structure:
(i) from 2 to 20 mm of metal, plastic or wood,
(ii) from 10 to 300 mm of plastic and
(iii) from 2 to 20 mm of metal, plastic or wood,
wherein the starting materials for the production of (ii) are introduced in the liquid state, in at least two steps, into the space between (i) and (iii), the space to be filled in the last filling process having a volume of from 0.1 to 1.5 m³ and the height of the space to be filled being less than 25 mm and the layers (i) and (iii) being aligned horizontally and having a deviation of in each case less than 0.5° from the horizontal plane.

2. The process according to claim 1, wherein, in each filling process, from 0.1 to 1.5 m³ of liquid starting components for the production of (ii) are introduced and the filling height of each filling process is less than 25 mm.

3. The process according to claim 1, wherein, after a filling operation, the subsequent filling process is not carried out until the starting components have reacted to give the plastic (ii) to such an extent that the liquid starting components of the two filling processes cannot mix with one another.

4. The process according to claim 1, wherein the space to be filled has a width of from 0.5 to 4 m, a length of from 1 to 12 m and a height, i.e. a distance between the layers (i) and (iii), of from 20 to 150 mm.

5. The process according to claim 1, wherein (ii) comprises polyisocyanate polyadducts obtainable by reacting the starting materials (a) isocyanate and (b) compounds reactive toward isocyanates.

6. A composite element obtainable by a process according to any of claims 1 to 5.

7. A ship or structure comprising a composite element according to claim 6.

## Revendications

1. Procédé de production d'éléments composites qui présentent la structure en couches suivante :
(i) 2 à 20 mm de métal, de plastique ou de bois,
(ii) 10 à 300 mm de plastique,
(iii) 2 à 20 mm de métal, de plastique ou de bois,
**caractérisé en ce que** l'on charge les substances de départ en vue de la production de (ii) à l'état liquide en au moins deux étapes dans l'espace entre (i) et (iii), l'espace à remplir lors du dernier processus de remplissage présentant un volume de 0,1 m³ à 1,5 m³ et la hauteur de l'espace à remplir étant inférieure à 25 mm et les couches (i) et (iii) étant orientées horizontalement et présentant un écart par rapport au plan horizontal respectif de moins de 0,5°.

2. Procédé selon la revendication 1, **caractérisé en ce que** l'on incorpore dans chaque processus de remplissage 0,1 m³ à 1,5 m³ de composants de départ liquides pour la production de (ii) et la hauteur de remplissage de chaque processus de remplissage est inférieure à 25 mm.

3. Procédé selon la revendication 1, **caractérisé en ce que**, lorsqu'un remplissage est terminé, on effectue le processus de remplissage suivant seulement lorsque les composants de départ ont réagi pour donner du plastique (ii) au point que les composants de départ liquides des deux processus de remplissage ne puissent pas se mélanger l'un à l'autre.

4. Procédé selon la revendication 1, **caractérisé en ce que** l'espace à remplir présente une largeur de 0,5 m à 4 m, une longueur de 1 m à 12 m et une hauteur, c'est-à-dire un intervalle entre les couches (i) et (iii), de 20 mm à 150 mm.

5. Procédé selon la revendication 1, **caractérisé en ce que** (ii) représente des produits de polyaddition de polyisocyanate obtenus par mise en réaction des substances de départ (a) isocyanate et (b) composés réactifs aux isocyanates.

6. Eléments composites obtenus par un procédé conforme à l'une des revendications 1 à 5.

7. Bateaux ou constructions contenant des éléments composites selon la revendication 6.
